## Europäisches Patentamt
## European Patent Office
## Office européen des brevets

(19)

(11) Numéro de publication:

# 0 031 752
## A2

(12) ⎯ **DEMANDE DE BREVET EUROPEEN**

(21) Numéro de dépôt: **80401783.8**

(22) Date de dépôt: **12.12.80**

(51) Int. Cl.³: **G 01 S 13/52**

(30) Priorité: **28.12.79 FR 7931969**

(43) Date de publication de la demande: **08.07.81**
**Bulletin 81/27**

(84) Etats contractants désignés: **DE GB IT NL**

(71) Demandeur: **THOMSON-CSF, 173, Boulevard Haussmann, F-75360 Paris Cedex 08 (FR)**

(72) Inventeur: **Guilhem, Robert, THOMSON-CSF SCPI 173, Bld Haussmann, F-75360 Paris Cedex 08 (FR)**

(74) Mandataire: **Eisenbeth, Jacques Pierre et al, "THOMSON-CSF" - SCPI 173, bld Haussmann, F-75360 Paris Cedex 08 (FR)**

(54) Dispositif d'élimination des échos fixes dans les équipements de détection électronique et équipements de détection à filtre numérique comportant un tel dispositif.

(57) L'invention concerne les dispositifs d'élimination des échos fixes, plus particulièrement utilisés dans les équipements radar.

Des moyens (5), commandés par les impulsions émises par le radar permettent d'annuler en sortie d'un filtre numérique éliminateur d'échos fixes, les réponses à ces impulsions contenant des signaux correspondant à des cibles immobiles non éliminées.

L'invention s'applique à tout dispositif d'élimination d'échos fixes.

## DISPOSITIF D'ELIMINATION DES ECHOS FIXES DANS LES EQUIPEMENTS DE DETECTION ELECTRONIQUE ET EQUIPEMENTS COMPORTANT UN TEL DISPOSITIF

La présente invention concerne les dispositifs d'élimination des échos fixes dans les équipements de détection électromagnétique et plus particulièrement, les dispositifs de traitement dans ce but, des signaux issus d'un filtre numérique disposé à la sortie vidéo des circuits de réception.

Dans les équipements radar, par exemple du type Doppler, il est courant sinon nécessaire d'éliminer les signaux échos correspondant à des cibles fixes à la sortie des circuits de vidéo. Pour cela, on utilise le plus souvent des filtres d'élimination des échos fixes, connus sous la dénomination anglo-saxonne MTI, qui effectuent au moins une soustraction entre les signaux échos provenant de deux impulsions successives, émises dans une même direction, à un intervalle de temps supérieur au temps nécessaire à l'onde émise pour parcourir une distance égale au double de la portée du radar. De cette soustraction, ne subsistent que les signaux correspondant à des cibles qui ont évolué pendant cet intervalle de temps. Ces filtres sont réalisés en technique numérique ou analogique, selon l'équipement dans lequel ils sont utilisés.

Un inconvénient de ce type de filtre provient de ce que les réponses respectives à la première et à la dernière impulsion d'émission dans une direction donnée, ne pouvant être soustraites à aucune autre, elles traversent ces filtres sans modification, ce qui peut être suffisant pour perturber le traitement postérieur de ces signaux.

En effet, si l'on suppose que pour une même direction de l'antenne, N impulsions sont émises, on obtient à la réception N réponses correspondant chacune d'entre elles aux échos des cibles rencontrées sur leur trajet. Si par exemple une simple soustraction est réalisée par ce filtre, on obtient l'opération de soustraction entre les deux termes d'une même colonne du tableau suivant :

$$(1) \quad (2) \quad (3) \ldots (i) \ldots (N-1) \quad (N)$$
$$(1) \quad (2) \ldots (i-1) \ldots (N-2) \quad (N-1) \quad (N)$$

en notant (i) la ième réponse.

On voit donc que les réponses extrêmes passent le filtre sans être débarassées des échos provenant de cibles fixes.

La présente invention vise à remédier à cet inconvénient.

Selon l'invention, le dispositif d'élimination comporte un moyen permettant d'annuler les réponses, correspondant aux impulsions émises, non débarassées à la sortie du filtre des échos fixes. Ce moyen est commandé par un signal synchronisé avec l'émission des impulsions.

D'autres avantages et caractéristiques de l'invention ressortiront de la description qui suit, donnée à l'aide des figures qui représentent :

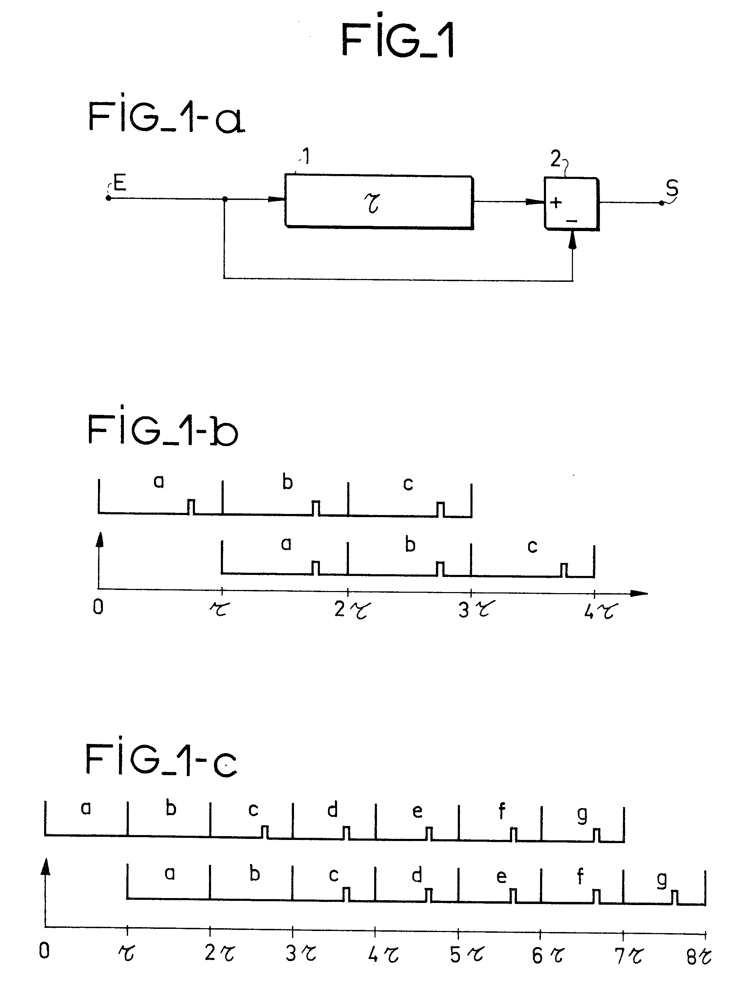

- la figure 1-a, un exemple de filtre simple annulation selon l'art antérieur ;

- la figure 1-b, un diagramme en fonction du temps, montrant le fonctionnement d'un filtre suivant la figure 1-a ;

- la figure 1-c, un diagramme en fonction du temps, montrant un exemple de réponse possible du filtre de la figure 1-a, dans le cas d'échos fixes situés au-delà de la portée du radar ;

- la figure 2, un exemple de filtre numérique semi parallèle à trois étages, selon l'art antérieur ;

- la figure 3, le dispositif selon l'invention associé à un filtre du type de celui de la figure 1-a ou 2.

La figure 1-a donne un exemple de filtre éliminateur d'échos fixes et utilisant une simple annulation. Il comporte une ligne à retard 1 et un circuit de soustraction 2. Son fonctionnement est le suivant :

La borne d'entrée E reçoit un signal qui est la réponse à chaque impulsion émise par le radar. Celle-ci est transmise d'une part directement à la sortie S par l'intermédiaire du circuit de soustraction 2, et d'autre part à cette même sortie S par l'intermédiaire du circuit 1, retardant les signaux d'un temps $\tau$. La valeur $\tau$ est choisie de telle façon que la réponse ayant traversé la ligne à retard 1 et la réponse suivante arrivent en même temps sur les entrées du soustracteur 2. La sortie S délivre donc les résultats des soustractions de couples de réponses correspondant à des impulsions émises consécutivement.

La figure 1-b montre les signaux arrivant sur le soustracteur 2 pour trois réponses a, b et c à des impulsions successives et émises dans la même direction, ces réponses étant appliquées à la borne E. Dans cet exemple, il est supposé que le seul écho existant durant le temps de réponse à une impulsion, correspond à une cible fixe. Il est clair que la sortie S du soustracteur 2 et donc du filtre, conservera le signal d'écho fixe sur les intervalles de temps de 0 à $\tau$ et 3 $\tau$ à 4 $\tau$.

La figure 1-c montre un cas particulier qui peut être gênant pour certains équipements radar. Si une cible fixe de taille très importante, comme par exemple une montagne, se trouve à une distance très supérieure à la portée maximale du radar, celui-ci verra cette cible, mais l'écho correspondant par exemple à la première impulsion apparaîtra dans la réponse correspondant à la troisième impulsion. Cet exemple est montré sur la figure 1-c qui représente les intervalles de temps de réception a, b, c, d, e, f et g entre sept impulsions émises successivement. Dans cet exemple, il est supposé que l'écho fixe considéré n'apparaît qu'à partir de l'intervalle de temps c. La sortie du soustracteur 2, dans cet exemple, délivrera un signal conservant l'écho fixe dans l'intervalle de temps correspondant à la soustraction des échos correspondant aux intervalles de temps c et b compte tenu du retard $\tau$ ; un phénomène similaire apparaît pour le dernier écho.

Le dispositif selon l'invention permet d'annuler les réponses aux impulsions émises, susceptibles de comporter de tels signaux d'échos fixes.

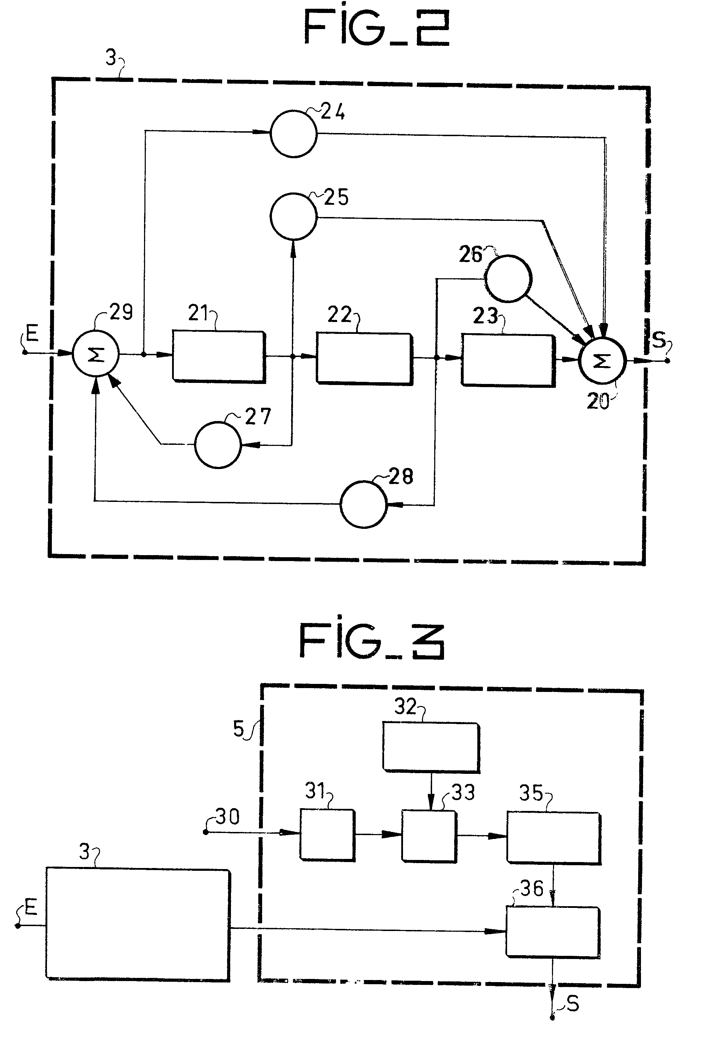

La figure 2 montre un exemple plus élaboré du filtre d'élimination d'échos fixes selon l'art antérieur.

Il comporte 3 circuits 21, 22, 23, introduisant un retard $\tau$, deux additionneurs 20 et 29 et cinq circuits de multiplication par des constantes algébriques prédéterminées 24, 25, 26, 27, 28. Le fonctionnement de ce type de filtre est connu et ne sera que brièvement rappelé ici ; on pourra à ce sujet se reporter aux nombreux ouvrages spécialisés, traitant de la question comme, par exemple, celui de J. DARRICAU, intitulé "Physique et Théorie du Radar" et publié chez SODIPE, édition 1973.

Les signaux correspondant à la réponse d'une impulsion émise, et entrant dans ce filtre, ont été en général préalablement échantillonnés, et chaque échantillon a eu son amplitude codée sous forme d'un mot binaire ; p mots formant une réponse à une impulsion entrent successivement dans la mémoire 21, en traversant un circuit additionneur 29 qui fait l'addition de ces p mots avec les p mots des autres mémoires correspondant aux réponses précédentes ; cette addition est algébrique du fait des multiplicateurs 27 et 28 qui multiplient les mots binaires contenus dans les circuits 21 et 22 par des constantes algébriques fixes. Cette opération permet l'élimination partielle des échos fixes. Pour améliorer ce résultat, l'opération est reproduite dans les trois étages en faisant remarquer que l'entrée dans le circuit de retard 21 de p mots provoque le passage des p mots, qui y étaient stockés, dans le circuit 22 et ainsi de suite ; à la sortie S du filtre, après une dernière addition algébrique par le circuit 20, les mots binaires correspondant aux échos fixes représentent des impulsions d'amplitude faible, sauf pour les réponses aux premières et aux dernières impulsions émises par chaque direction d'antenne. Cependant, ce type de filtre présente, pour les premières et dernières réponses, les mêmes défauts de filtrage que vues à propos du filtre simple de la figure 1-a. De même, il ne permet pas d'éliminer complètement l'écho fixe important et lointain.

La figure 3 montre le dispositif selon l'invention associé à un filtre numérique éliminant les échos fixes, d'un type quelconque, comme par exemple ceux des figures 1-a ou 2. Il comporte, outre un filtre 3 d'élimination des échos fixes du type, par exemple, de ceux montrés aux figures 1-a ou 2, un moyen 5 d'annulation des réponses dues aux impulsions susceptibles de comporter des signaux correspondant à des échos fixes, qui ont été transmis par le fitre 3 ; ce moyen 5 est connecté à la sortie du filtre 3. Il reçoit par ailleurs sur une borne 30 des signaux synchronisés avec l'émission de chaque impulsion.

Le circuit 5 comporte un compteur 31 recevant les signaux de la borne 30, un comparateur d'égalité 33 recevant la sortie du capteur 31 et le contenu de circuits mémoires 32, un circuit interrupteur 36 constitué par exemple par un ensemble de circuits ET logique et/ou analogique dont les entrées sont connectées à la sortie du comparateur 33 par l'intermédiaire de circuits bascules 35 et à la sortie du filtre 3. La sortie de ces circuits ET 36 est connectée à une borne S.

A chaque émission d'une impulsion par le radar, le compteur 31 est incrémenté d'une unité par un signal en synchronisation avec cette émission. De plus, la première impulsion émise dans une direction de l'antenne donnée coïncide avec la réinitialisation du compteur 31, par exemple en limitant la capacité de ce compteur. Le comparateur 33 compare le mot binaire issu du compteur 31 avec ceux stockés dans les mémoires 32 programmables et qui correspondent aux numéros des réponses aux impulsions pour lesquelles l'interrupteur 36 à la sortie du filtre 3 doit être commuté. Pour chaque égalité, le comparateur 33 délivre une impulsion qui, commandant les bascules 35, autorise ou non le transfert des signaux issus du fitre 3 au travers des circuits ET 36.

Les mots binaires contenus dans les mémoires programmables 32 dépendent donc du lieu d'utilisation et de l'équipement dans lequel ce filtre est monté.

On a ainsi décrit un dispositif d'élimination des échos fixes issus d'un filtre qui peut être ou non récurrent.

6

# REVENDICATIONS

1. Dispositif d'élimination des échos fixes, plus particulièrement utilisés dans les équipements de détection électromagnétique comportant un filtre numérique récurrent ou non (3) à la sortie des circuits vidéo, caractérisé en ce qu'il comporte en outre, connecté à la sortie de ce filtre numérique (3), un moyen (5) d'annulation des signaux d'échos fixes transmis par le filtre (3) et commandé par des impulsions synchronisées avec les impulsions émises pour le radar.

2. Dispositif d'élimination des échos fixes, selon la revendication 1, caractérisé en ce que le moyen (5) comporte un interrupteur (36) connecté à la sortie du filtre (3), cet interrupteur (36) étant commandé par un groupe de circuits bascules (35) dont l'entrée est connectée à la sortie d'un groupe de comparateurs (33) recevant le contenu des mémoires (32) et la sortie des compteurs numériques (31) incrémentés par des impulsions, correspondant au début de chaque récurrence.

3. Dispositif d'élimination des échos fixes, selon la revendication 2, caractérisé en ce que l'interrupteur (36) comporte des circuits porte "ET" transmettant des signaux logiques et/ou analogiques.

4. Dispositif d'élimination des échos fixes, selon la revendication 2, caractérisé en ce que les circuits mémoires (32) sont programmables et stockent de façon permanente les mots binaires correspondant aux numéros des réponses aux impulsions émises pour lesquelles l'interrupteur (36) est ouvert ou fermé.

5. Filtres numériques caractérisés en ce qu'ils comportent un dispositif d'élimination des échos fixes selon l'une quelconque des revendications précédentes.

# FIG_1

## FIG_1-a

## FIG_1-b

## FIG_1-c

FiG_2

FiG_3